# EUROPÄISCHE PATENTSCHRIFT

(11) **EP 2 145 101 B1**
(45) Veröffentlichungstag und Bekanntmachung des Hinweises auf die Patenterteilung: **01.09.2010**
(21) Anmeldenummer: 08758775.4
(22) Anmeldetag: 27.05.2008
(51) Int. Cl.: F03B 11/06, F16C 17/04, F16C 27/06, F16C 27/08

(54) **AXIALLAGER FÜR EINE WELLE, INSBESONDERE FÜR DIE WELLE EINER WASSERTURBINE**
AXIAL BEARING FOR A SHAFT, PARTICULARLY FOR THE SHAFT OF A WATER TURBINE
PALIER AXIAL POUR UN ARBRE, EN PARTICULIER POUR L'ARBRE D'UNE TURBINE À EAU

(30) Priorität: 18.06.2007 DE 102007028456
(43) Veröffentlichungstag der Anmeldung: 20.01.2010
(73) Patentinhaber: Voith Patent GmbH, 89522 Heidenheim (DE)
(72) Erfinder: BOTTENSCHEIN, Michael, 89233 Neu-Ulm (DE)
(74) Vertreter: Dr. Weitzel & Partner
(86) Internationale Anmeldenummer: PCT/EP2008/004189
(87) Internationale Veröffentlichungsnummer: WO 2008/155002

(56) Entgegenhaltungen:
- DE-A1- 2 225 131
- DE-A1- 2 626 609
- DE-A1- 2 901 988
- US-A- 2 686 667
- US-A- 2 907 474

## Beschreibung

Die Erfindung betrifft ein Axiallager zum Aufnehmen hoher Axiallasten.

Derartige Lager werden beispielsweise für Wasserturbinen oder Pumpen mit vertikalen Wellen verwendet.

Ein solches Axiallager ist beispielsweise in DE 26 26 609 C3 beschrieben.

Das Lager umfasst im wesentlichen in axialer Kraftflussrichtung als rotierende Teile die Welle, den Wellenbund, die Manschette, sowie den Spurring und als stützende stehende Teile die Lagerschuhe, die Federelemente, den Lagerring sowie die Stützkonstruktion. Damit sich bei Betrieb an allen Lagerschuhen ein hydrodynamischer Schmierfilm zwischen dem Spurring und den Lagerschuhen einstellen kann, müssen die abstützenden Federelement das Kippen der Lagerschuhe ermöglichen und Fertigungs- wie auch Montagetoleranzen durch axiale Nachgiebigkeit kompensieren. Um bei bekanntem Axiallager eine ausreichende Nachgiebigkeit sicherzustellen, hat sich die parallele Anordnung von einzelner kleinerer Federelemente aus Gummi bewährt.

Die Federelemente bestehen bei dem bekannten Axiallager aus einem wenige Millimeter hohen Gummistempel, der auf ein dünnes Trägerblech aufvulkanisiert ist. Die Vulkanisierung erhöht die axiale Steifigkeit beträchtlich. Zudem unterstützt sie die Formstabilität und minimiert das übliche Kriechen den Gummi unter Last. Zwischen den nebeneinander angeordneten Gummielementen muss ausreichend Freiraum sein. Der Gummi wäre bei vollständiger Kapselung inkompressibel und für die Lagerung der Lagerschuhe nicht tauglich.

Das bekannte Lager hat sich bei mäßigen Axiallasten bewährt. Bei sehr hohen axialen Lasten kann die Querausdehnung den Gummielements so groß werden, dass Risse entstehen oder die Vulkanisierung den Gummistempels zum Trägerblech beschädigt wird. Die Gummielemente verlieren deutlich an Steifigkeit und können ihre Funktion nicht mehr erfüllen.

Die Federelemente bestehen bei dem bekannten Axiallager aus kleinen Scheiben. Diese können rund oder eckig sein. Zwischen einander benachbarten Scheiben besteht in belastetem wie auch unbelastetem Zustand des Axiallagers ein Abstand.

Das bekannte Axiallager hat sich bei mäßigen Axiallasten bewährt. Ab einer bestimmten Größe der Axiallast hingegen werden Zerstörungen der scheibenförmigen Federelemente festgestellt. Die Scheiben werden nämlich sehr stark komprimiert. Dabei können sie ihre Elastizität verlieren, so dass sie selbst dauerhaft zerstört werden. Auch kann es zu einer Zerstörung der Vulkanisierung kommen, die sich zwischen den scheibenförmigen Federelementen und dem Lagerring befindet.

Der Erfindung liegt die Aufgabe zugrunde, ein Axiallager gemäß dem Oberbegriff von Anspruch 1 derart zu gestalten, dass es höhere Axiallasten aufnehmen kann, ohne dass Zerstörungen an Einzelelementen des Lagers auftreten, insbesondere an den Federelementen.

Diese Aufgabe wird durch die Merkmale von Anspruch 1 gelöst. Demgemäß werden die Federelemente derart gestaltet, dass einander benachbarte Federelemente in belastetem Zustand einander berühren und sich gegenseitig abstützen.

Die Trägerplatte und der aufvulkanisierte Gummistempel besitzen in der Draufsicht die gleiche Grundform. Das Übermaß der größeren Trägerblechs ist so gestaltet, dass bei Platzierung der Federelemente nebeneinander auf Stoß Trägerblech an Trägerblech, dem Gummistempel ein ausreichend definiertes Volumen zur Querausdehnung zur Verfügung steht. Werden die Betriebslasten deutlich überschritten, stützen sich die Gummielemente gegenseitig in Querrichtung. Unzulässig hohe Verformungen, die zur Schädigung des Gummi führen, werden so vermieden.

Es mag somit in unbelastetem Zustand zwischen einander benachbarten Federelementen ein Spalt verbleiben. Dieser wird jedoch ab einer bestimmten Axiallast zu Null. Die einander benachbarten Federelemente gelangen somit zum gegenseitigen Anliegen. Sie stützen sich hierbei gegenseitig ab. Damit wird eine Art konstruktiver Überlastungsschutz gegen Zerstörung der Federelemente geschaffen.

Die Federelemente können grundsätzlich jegliche Kontur aufweisen. Besonders vorteilhaft sind Sechsecke oder Rechtecke oder Dreiecke, somit Konturen, die ein lückenloses Aneinanderfügen einander benachbarter Federelemente erlauben. Es ist aber auch möglich, den Federelementen jegliche beliebige andere Kontur zu geben. Wesentlich ist, dass sie wenigstens ab einem bestimmten Belastungszustand lückenlos aneinander anliegen.

Vorteilhaft sind solche Konturen, die ein lückenloses Aneinanderfügen benachbarter Federelemente erlauben. So kann die zur Verfügung stehen Abstützfläche an der Lagerschuh-Rückseite effektive genutzt und die Traglast gesteigert werden. Besondere Vorzüge weist die sechseckige Grundform auf. Bei Anordnung Kante an Kante, also der Wabenform, gibt es keine durchgehenden Linien die ein Verrutschen von ganzen Federreihen ermöglichen. Bei dreieckigen oder auch rechteckigen Elementen wäre das der Fall. Der stumpfe Innenwinkel von 120° führt bei starker Querdehnung zu keinen nennenswerten Spannungsüberhöhungen gegenüber einem kreisrunden Federelement. Die sechseckige Ausgangsform unverformt ohne Last und die ebenfalls sechseckige Endform unter Maximallast garantieren eine homogene Belastung der Gummi entlang des Umfangs. Würde man runde Gummistempel, egal ob in einem quadratischen oder sechseckigen Raster angeordnet, bis auf Block verformen, gäbe es Stellen am Umfang, die sich früher, und solche, die sich später in Querrichtung abstützen. Die Belastung entlang des Umfangs wäre gerade bei höchster Belastung nicht homogen.

In montiertem Zustand, das heißt auf den Lagerring aufgebracht, sieht die Gesamtheit aller Federelemente aus wie ein sogenanntes Puzzle, das als Geduldspiel bekannt geworden ist.

Durch die erfindungsgemäße Gestaltung der Federelemente wird auch ein einfaches Herstellen erreicht: So können die Federelemente zum Beispiel aus einer Gummiplatte oder einer Platte aus sonstigem elastischen Material ausgestanzt werden, beispielsweise mit einem sogenannten Bandstahl.

Die Erfindung ist anhand der Zeichnung näher erläutert. Darin ist im Einzelnen Folgendes dargestellt:
- Figur 1: zeigt in einem Längsschnitt das Axiallager einer Wasserturbine.
- Figur 2: zeigt einen Schnitt entlang der Schnittlinie II - II in Figur 1.
- Figur 3: zeigt in vergrößerter Darstellung eine Draufsicht auf eine Mehrzahl von sechseckigen Federelementen.
- Figur 4: zeigt in vergrößerter Darstellung in Draufsicht eine Mehrzahl von dreieckigen Federelementen.
- Figur 5: zeigt in vergrößerter Darstellung in Draufsicht eine Mehrzahl von Federelementen einer nicht-regelmäßigen Kontur.
- Figur 6: zeigt in vergrößerter Darstellung zwei einander benachbarte Federelemente in belastetem und unbelastetem Zustand.

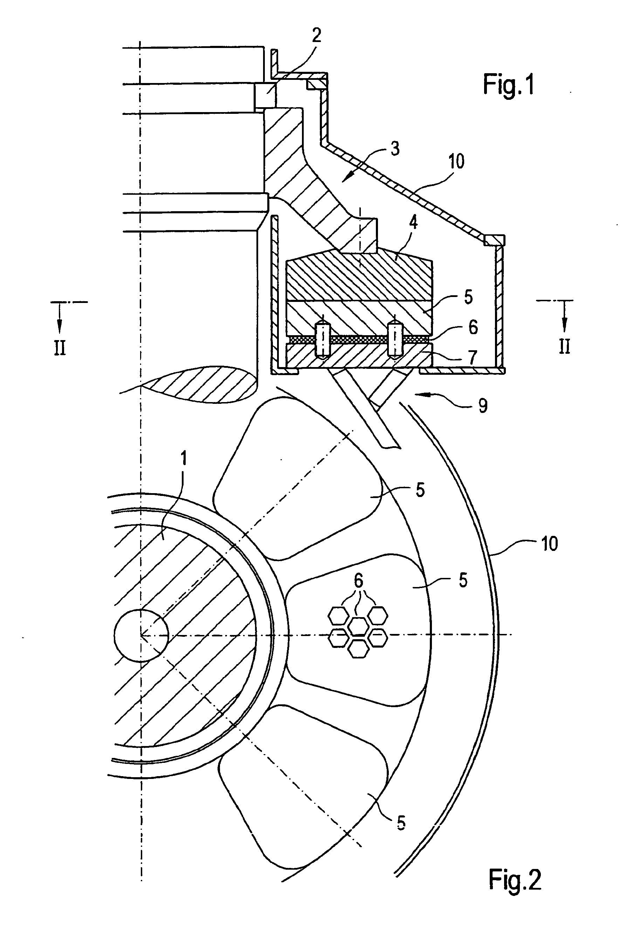

In Figur 1 erkennt man eine Welle 1 mit vertikaler Achse 1.1. Die Welle ist umgeben von einem Wellenbund 2. Der Wellenbund 2 ist von einer Manschette 3 getragen, die die Welle 1 umschließt. Das untere Ende der Manschette 3 stützt sich auf einem Spurring 4 ab, der ebenfalls die Welle 1 umschließt. Der Spurring 4 ruht seinerseits auf einer Mehrzahl von Lagerschuhen 5, die um die Welle 1 herum in gleichmäßigen Abständen angeordnet sind.

Es folgen die Federelemente 6. Diese sind auf einen Lagerring 7 aufgelegt. Stifte 8 greifen in Bohrungen der Lagerschuhe 5 sowie des Lagerringes 7 ein. Eine Stützkonstruktion 9 stützt den Lagerring 7. Ein Gehäuse 10 umschließt Wellenbund 2, Manschette 3, Spurring 4, die Lagerschuhe 5, die Federelemente 6 sowie den Spurring 7.

Die Gestalt der Federelemente ist in Figur 2 angedeutet. Wie man sieht, handelt es sich hierbei um sechseckige Scheiben.

Die Federelemente müssen nicht unbedingt Scheibenform haben, sie können auch eine andere Gestalt haben. Jedenfalls sind sie in Draufsicht gesehen derart gestaltet, wie in Anspruch 1 definiert.

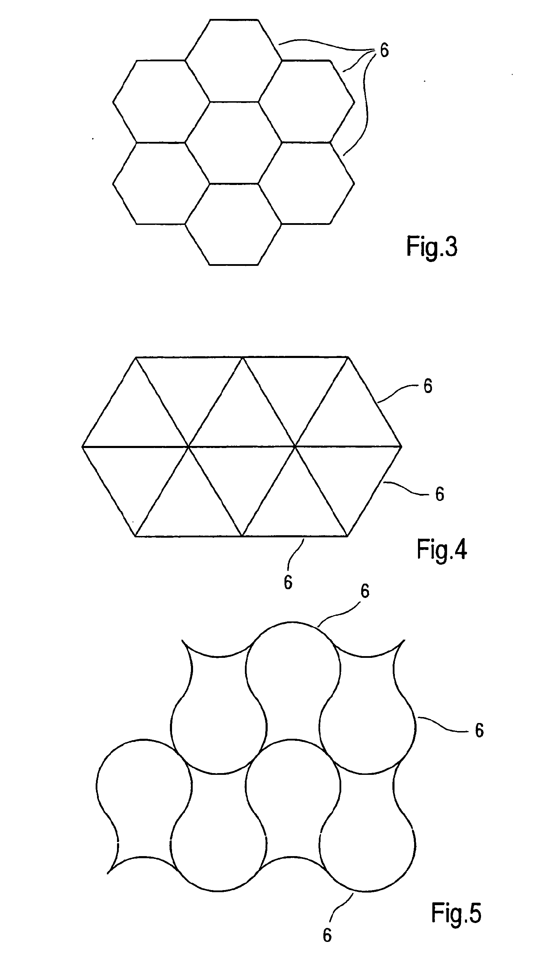

Die Figuren 3, 4 und 5 zeigen jeweils in Draufsicht verschiedene Konfigurationen der Federelemente. Gemäß Figur 3 sind die Federelemente 6 sechseckig.

Die Federelemente 6 gemäß Figur 4 haben die Gestalt von gleichseitigen Dreiecken.

Die Federelemente von Figur 5 weichen von geometrischen Konturen ab. Sie haben die Gestalt von Stempelgriffen.

Auch jegliche andere Konfigurationen sind denkbar. Entscheidend ist in jedem Falle, dass die einzelnen Federelemente durch eine Trennlinie voneinander getrennt sind, und dass spätestens ab einer bestimmten Belastung ein gegenseitiges Berühren einander benachbarter Federelemente stattfindet. Ein solches Berühren könnte auch schon vor Aufbringen einer Axiallast vorliegen.

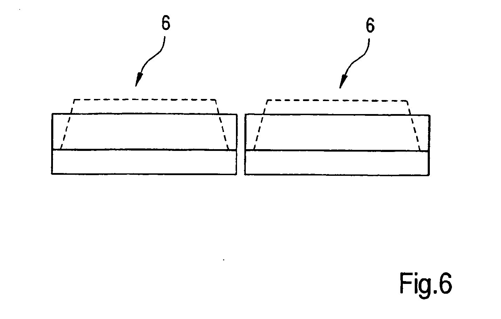

Aus der schematischen Darstellung gemäß Figur 6 erkennt man das Verhalten einander benachbarter Federelemente in unbelastetem und in belastetem Zustand. Der unbelastete Zustand ist gestrichelt veranschaulicht, der belastete Zustand hingegen mit ausgezogenen Linien.

Wie man sieht, hat das einzelne Federelement in unbelastetem Zustand naturgemäß eine größere Dicke, als in belastetem Zustand. Es hat außerdem eine kegelstumpfförmige Gestalt - siehe die geneigten Umfangsflächen. Die Umfangsflächen berühren einander nicht. Vielmehr herrscht ein Spalt zwischen einander benachbarten Umfangsflächen.

In belastetem Zustand sind die einzelnen Federelemente selbstverständlich komprimiert und damit weniger hoch. Die Federelemente 6, 6 haben eine im Wesentlichen rechteckige Querschnittskontur. Die Umfangsflächen haben sich einander angenähert. Bei noch stärkerer Belastung werden sie sich berühren.

Wenn auch hier nicht dargestellt, so kann es zweckmäßig oder gar notwendig sein, die Gesamtheit aller Federelemente, die einem Lagerschuh 5 zugeordnet sind, durch einen Reif zu umschließen. Gegen einen solchen Reif können sich die äußeren Federelemente bei Belastung abstützen. Der reif kann aus einem Blech bestehen. Ein solches Umrandungsblech verhindert das Verrutschen der Federelemente, ausgelöst zum Beispiel durch Vibrationen sowie beim Einbau oder beim Ausbau.

Die Vorteile der Erfindung sollen im Folgenden nochmals wie folgt erläutert werden:

Die Federkennlinie eines Federelementes verläuft bei Belastung zunächst fast linear. Sie steigt sodann aber bei einer größeren Belastung zunehmend exponentiell an.

Durch die Erfindung wird die Möglichkeit einer Ausdehnung des einzelnen Federelementes in einer Richtung senkrecht zur Lastwirkung, das heißt im Allgemeinen senkrecht zur Längsachse 1.1 der Welle 1, begrenzt. Durch die erfindungsgemäße Kontur der Federelemente lässt sich der zur Verfügung stehende Raum noch effektiver nutzen. Eine unzulässig hohe Einfederung wird durch das gegenseitige Abstützen der Federelemente verhindert.

Die Erfindung bringt noch einen weiteren Vorteil bezüglich der Fertigung der Federelemente. Die Federelemente können nämlich, wie oben erwähnt, aus einer Platte aus gummielastischem oder sonstigem Material ausgestanzt werden, wobei kein oder praktisch kein Abfall an Material entsteht.

Die Felderelemente 6 können auf den Lagerschuh aufgelegt oder aufvulkanisiert werden.

### Bezugszeichenliste

- 1: Welle
- 1.1: Achse
- 2: Wellenbund
- 3: Manschette
- 4: Spurring
- 5: Lagerschuh
- 6: Federelemente
- 7: Lagerring
- 8: Stift
- 9: Stützkonstruktion
- 10: Gehäuse

## Patentansprüche

1. Axiallager zum Aufnehmen hoher Axiallasten einer Welle (1);
1.1 mit einem Lagerring (7), der eine Zentralbohrung zum Hindurchführen der Welle (1) aufweist und der sich auf einer festen Unterlage (9) abstützt;
1.2 mit einer Mehrzahl von auf dem Lagerring (7) aufgebrachten Federelementen (6) aus elastischem Material;
1.3 mit einer Lastübertragungseinrichtung (3) zum Übertragen der Last von der Welle (1) auf die Federelemente (6);
**gekennzeichnet durch** die folgenden Merkmale:
1.4 die Federelemente (6) sind elastische Körper, die nach Art eines Puzzles formschlüssig aneinander und/oder ineinander fügbar sind;
1.5 die Konturen der Federelemente (6) sind derart gestaltet, dass zwischen einander benachbarten Federelementen (6) zumindest ab einem gewissen Belastungszustand kein Spalt verbleibt.

2. Axiallager nach Anspruch 1, **dadurch gekennzeichnet, dass** die Federelemente (6) parallel zueinander angeordnet sind.

3. Axiallager nach Anspruch 1 oder 2, **dadurch gekennzeichnet, dass** die Federelemente (6) in Richtung der Lastwirkung eine sechseckige, rechteckige oder dreieckige Kontur aufweisen.

4. Axiallager nach einem der Ansprüche 1 bis 3, **dadurch gekennzeichnet, dass** die Federelemente (6) gruppenweise angeordnet und jeweils von einem Lagerschuh (5) abgedeckt sind.

5. Axiallager nach Anspruch 4, **dadurch gekennzeichnet, dass** die Lastübertragungseinrichtung eine Manschette (3) umfasst, die einerseits einen Wellenbund (2) abstützt, der die Welle (1) umschließt und mit dieser fest verbunden ist, und die sich ihrerseits auf einem Spurring (4) abstützt, der konzentrisch zur Welle angeordnet ist und sich seinerseits auf den Lagerschuhen (5) abstützt.

6. Verfahren zum Herstellen von Federelementen (6) zur Anwendung bei einem Axiallager gemäß einem der Ansprüche 1 bis 5, **dadurch gekennzeichnet, dass** die Federelemente (6) aus einer Platte aus elastischem Material ausgestanzt werden.

## Claims

1. An axial bearing for absorbing high axial loads of a shaft (1);
1.1 having a bearing ring (7), which has a central hole for leading through the shaft (1) and is supported on a fixed foundation (9);
1.2 having a plurality of spring elements (6) made of elastic material applied to the bearing ring (7);
1.3 having a load transmission device (3) for transmitting the load from the shaft (1) to the spring elements (6);
**characterized by** the following features:
1.4 the spring elements (6) are elastic bodies, which can be joined to one another and/or in one another in a formfitting manner like a puzzle;
1.5 the contours of the spring elements (6) are designed in such a manner that no gap remains between spring elements (6) adjacent to one another at least from a certain load state.

2. The axial bearing according to Claim 1, **characterized in that** the spring elements (6) are situated parallel to one another.

3. The axial bearing according to Claim 1 or 2, **characterized in that** the spring elements (6) have a hexagonal, rectangular, or triangular contour in the direction of the load action.

4. The axial bearing according to one of Claims 1 through 3, **characterized in that** the spring elements (6) are situated in groups and are each covered by a bearing shoe (5).

5. The axial bearing according to Claim 4, **characterized in that** the load transmission device comprises a sleeve (3), which supports a shaft shoulder (2) on one side, which encloses the shaft (1) and is fixedly connected thereto, and which is in turn supported on a flange ring (4), which is situated concentrically to the shaft and is in turn supported on the bearing shoes (5).

6. A method for producing spring elements (6) for use in an axial bearing according to one of Claims 1 through 5, **characterized in that** the spring elements (6) are stamped out of a plate made of elastic material.

## Revendications

1. Palier de butée destiné à absorber des charges axiales importantes d'un arbre (1) ;
1.1 avec une bague de palier (7) présentant un alésage central pour le passage de l'arbre (1), qui s'appuie sur un support fixe (9) ;
1.2 avec une pluralité d'éléments de ressort (6) en matériau élastique appliqués sur la bague de palier (7) ;
1.3 avec un dispositif de transfert de la charge (3) destiné à transférer la charge de l'arbre (1) aux éléments de ressort (6) ;
**caractérisé en ce que** :
1.4 les éléments de ressort (6) sont des blocs élastiques qui peuvent être assemblés par correspondance de forme les uns sur et/ou dans les autres à la manière d'un puzzle ;
1.5 les contours des éléments de ressort (6) sont conformés de telle façon qu'il ne reste plus d'espace entre des éléments de ressort (6) voisins, au moins à partir d'un certain état de charge.

2. Palier de butée selon la revendication 1, **caractérisé en ce que** les éléments de ressort (6) sont disposés parallèlement les uns aux autres.

3. Palier de butée selon la revendication 1 ou 2, **caractérisé en ce que** les éléments de ressort (6) présentent un contour hexagonal, rectangulaire ou triangulaire dans le sens d'action de la charge.

4. Palier de butée selon l'une des revendications 1 à 3, **caractérisé en ce que** les éléments de ressort (6) sont disposés en groupe et sont couverts chacun par un patin de palier (5).

5. Palier de butée selon la revendication 4, **caractérisé en ce que** le dispositif de transfert de la charge comprend un manchon (3) qui soutient d'un côté un collet d'arbre (2) entourant l'arbre (1) et relié à demeure à celui-ci, et qui s'appuie pour sa part sur une bague mobile (4) concentrique de l'arbre et qui s'appuie pour sa part sur les patins de palier (5).

6. Procédé pour la fabrication d'éléments de ressort (6) destinés à être utilisés dans un palier de butée selon l'une des revendications 1 à 5, **caractérisé en ce que** les éléments de ressort (6) sont découpés à l'emporte-pièce dans une nappe de matériau élastique.
